Europäisches Patentamt

(19) European Patent Office

Office européen des brevets

(11) Publication number: **0 194 989**
**B1**

# EUROPEAN PATENT SPECIFICATION

(45) Date of publication of the patent specification: **12.07.89**

(51) Int. Cl.⁴: **F 16 D  69/02**

(21) Application number: **86870033.7**

(22) Date of filing: **13.03.86**

(54) Friction material composites containing crystalline phosphate fibers and a process for the preparation thereof.

(30) Priority: **14.03.85  US 711894**
**14.03.85  US 711893**

(43) Date of publication of application:
**17.09.86 Bulletin 86/38**

(45) Publication of the grant of the patent:
**12.07.89 Bulletin 89/28**

(84) Designated Contracting States:
**AT BE CH DE FR GB IT LI LU NL SE**

(56) References cited:
**FR-A-2 208 487**
**GB-A-2 000 793**

(73) Proprietor: **Monsanto Company, Patent Department 800 North Lindbergh Boulevard, St. Louis Missouri 63167- 7020 (US)**

(72) Inventor: **Crutchfield, Marvin Mack, 1529 Cerulean Drive, Creve Coeur Missouri 63146 (US)**
Inventor: **Griffith, Edward Jackson, 310 Coventry Lane, Manchester Missouri 63021 (US)**
Inventor: **Hinkebein, John Arnold, 2450 Barrett Station Road, Ballwin Missouri 63021 (US)**

(74) Representative: **McLean, Peter, Monsanto Europe S.A. Patent Department Avenue de Tervuren 270- 272 Letter Box No 1, B-1150 Brussels (BE)**

## Description

## Background of the Invention

### Field of the Invention

This invention relates to asbestos-free friction material composites and a process for the preparation of such composites. More particularly, this invention relates to asbestos-free friction material composites containing asbestiform crystalline calcium M phosphate fibers wherein M is a metal cation selected from the group consisting of sodium and lithium, and mixtures thereof and a process for the preparation. The friction material composites are suitable for use as brake pads, brake linings, clutch facings, and other similar uses where friction material composites are needed.

### Description of the prior Art

Friction material composites for use as brake elements in automotive, truck, bus, or similar vehicles are known in the art. In general, such composites contain asbestos fibers as an inorganic fibrous reinforcement material. The popularity enjoyed by asbestos fibers for such uses resides in the fact that asbestos has been considered to be relatively inexpensive, is easily preformed, and provides a brake element having excellent wear, durability, friction, and strength properties. However, asbestos has recently been found to expose workers making or installing the brake elements as well as the public to a potentially serious health hazard. It has been determined that the inhalation of small asbestos fibers can result in a disease known as asbestosis in which these fibers accumulate in the lungs, scar lung tissue, and cause many respiratory problems. It has become increasingly clear that inhalation of asbestos fibers over an extended period of time can lead to a cancer of the lining of the lungs known as mesothelioma as well as lung cancer.

In addition, in the operation of conventional asbestosbased brake elements, as the brake element wears away, some of the asbestos discharges into the atmosphere in its fibrous form to thereby pose a potential hazard. In view of the potential hazard of asbestos material, it has become increasingly desirable to find substitutes for asbestos in those applications involving the manufacture and use of materials containing asbestos, and more specifically, for manufacturers of friction materials such as asbestos-based brake elements to find suitable substitutes for asbestos.

U.S. Patent 4 137 214 discloses friction compositions containing nonasbestos fibrous materials. Suitable nonasbestos materials include, for example, fiber glass, mineral wool, silica fibers, carbon fibers, boron fibers, and the like; and tungsten fibers or steel fibers and the like.

In U.S. Patent 4 278 584, an asbestos-free organic friction material reportedly having favorable mechanical, thermal, and frictional properties is described. Such materials contain phenolic resins, carbon fibers, steel fibers, and filler materials, and are useful as brakes and clutches of automobile and brake blocks of railroad (railway) vehicles.

U.S. Patent 4 374 211 discloses a nonasbestos friction material composite. Such composites are comprised of a thermosetting binder, a nonasbestos fibrous material such as, for example, those disclosed in U.S. Patent 4 137 214 discussed hereinabove, and an effective amount of an aramid polymer (an aromatic polycarbonamide) pulp fiber. Such friction material reportedly results in good structural integrity of preforms made therefrom.

Although these prior art friction materials are effective to eliminate asbestos in products utilizing such friction materials, none have been found to provide strength, wear resistance, and frictional properties comparable to those provided by asbestos-containing friction materials, coupled with economical materials and manufacturing costs. For example, glass fibers have a tendency to fracture in the mixing procedures used to prepare the friction compositions with the result that they contribute poor reinforcement. Furthermore, glass fibers are brittle and tend to break down at the braking interface during service of the brake element and high wear rates are thereby encountered. Moreover, the nonporous glass fibers have a low surface area as compared with asbestos, and the glass fibers do not absorb products of decomposition of the organic components caused by heat which occurs during braking. As a result, when glass fibers are used as the reinforcing material, friction drops precipitously at the temperatures generated during braking. This friction drop due to poor absorbtion by the reinforcing fibers is known in the brake industry as "fade". Similarly, organic fibers such as cotton, wood pulp, and rayon, synthetic fibers composed of such organic polymers as polyacrylonitrile, polyamide, polyester, and the like have low surface area and exhibit poor heat resistance. These latter fiber materials tend to lose strength at temperatures in the range of 93°C - 149°C (240°F - 300°F) and break down in the same manner as the binder material. The discovery of the friction material composites of the instant invention, which exhibits properties comparable to, and in many instances superior to, conventional asbestos-containing friction material in wear, durability, friction, and strength, while at the same time presenting no health hazard and a process for their preparation, therefore, is believed to be a decided advance in the asbestos-free friction material composite art.

EP 0 194 989 B1

## Summary of the Invention

It is an object of this invention to provide novel asbestos-free friction material composites containing asbestiform crystalline calcium M phosphate fibers wherein M is a metal cation selected from the group consisting of sodium and lithium, and mixtures thereof, which exhibit wear, durability, friction, and strength characteristics comparable to or exceeding those of conventional asbestos-type friction material composites, and at the same time present no health hazard.

It is also an object of this invention to provide an asbestos-free friction material composite which can be shaped into brake pads, brake lining segments, clutch facings, and the like using conventional processes.

Another object of this invention is to provide a process for preparing novel asbestos-free friction material composites containing asbestiform crystalline calcium M phosphate fibers wherein M is a metal cation selected from the group consisting of sodium and lithium, and mixtures thereof, which exhibit wear, durability, friction, and strength characteristics comparable to or exceeding those of conventional asbestos-type friction material composites, and at the same time present no health hazard.

Yet another object of this invention is to provide a process for preparing an asbestos-free friction material composite which can be shaped into brake pads, brake lining segments, clutch facings, and the like using conventional processes.

These and other objects will become apparent from the accompanying description and claims. The provision of the friction material composites objects is achieved by friction material composites which comprise:

(a) asbestiform crystalline calcium M phosphate fibers wherein M is a metal cation selected from the group consisting of sodium and lithium, and mixtures thereof;
(b) a thermosetting resin-based binder;
(c) a particulate friction modifier; and
(d) a particulate inorganic filler.

The provision of the process for the preparation of such friction material composites objects is achieved by a process which comprises:

(a) blending asbestiform crystalline calcium M phosphate fibers wherein M is a metal cation selected from the group consisting of sodium and lithium, and mixtures thereof, a thermosetting resin-based binder, a particulate friction modifier, and a particulate inorganic filler to form a uniform mixture;
(b) placing the mixture within a mold cavity having a shape approximately that of the desired composite; and
(c) compressing the mixture at a temperature and a pressure, and for a time, sufficient to form the asbestos-free friction material composites.

## Description of the preferred embodiments

In accordance with this invention, novel asbestos-free friction material composites, and a process for the preparation thereof, are provided. The friction material composites exhibit wear, durability, friction, and strength characteristics comparable to, or exceeding, those of conventional asbestos-type friction materials, while at the same time present no health hazard. Such composites comprise:

(a) asbestiform crystalline calcium M phosphate fibers wherein M is a metal cation selected from the group consisting of sodium and lithium, and mixtures thereof;
(b) a thermosetting resin-based binder;
(c) a particulate friction modifier; and
(d) a particulate inorganic filler.

The composites are prepared by a process which comprises:

(a) blending asbestiform crystalline calcium M phosphate fibers wherein M is a metal cation selected from the group consisting of sodium and lithium, and mixtures thereof, a thermosetting resin-based binder, a particulate friction modifier, and a particulate inorganic filler to form a uniform mixture;
(b) placing the mixture within a mold cavity having a shape approximately that of the desired composite; and
(c) compressing the mixture at a temperature and a pressure, and for a time, sufficient to form the asbestos-free friction material composites.

It is contemplated that, in use, the asbestos-free friction material composites of the instant invention may be fastened unto standard brake shoe members by conventional means, either by integral molding, riveting or bonding with a rubber solventbased adhesive, as desired, for installation into conventional brake assemblies.

The asbestiform crystalline calcium M phosphate fibers wherein M is a metal cation selected from the group consisting of sodium and lithium, and mixtures thereof, are high molecular phosphates $[CaM(PO_3)_3]_n$ wherein n

3

is a number representing the number of repeating $CaM(PO_3)_3$ units. Advantageously, such fibers have an aspect ratio (length-to-average diameter ratio, L/D) of at least 30 : 1 and an average diameter in the range of from about 0.5 micron ($\mu$m) to about 20 $\mu$m. Preferred fibers are those having an aspect ratio of from about 40 : 1 to about 100 : 1 and an average diameter from about 1 micron to about 10 microns. Among such fibers, particularly preferred are calcium M phosphate fibers wherein M is sodium.

Details of the preparation, crystallinity, and other characterizing properties of asbestiform crystalline calcium M phosphate fibers are described in U.S. Patent 4 346 028, the disclosure of which is herein incorporated by reference.

It is contemplated within the scope of the instant invention that the asbestiform crystalline calcium M phosphate fibers may be used alone as the fibrous reinforcement material or in combination with suitable auxiliary fibers. When employed, the auxiliary fibers preferably will be present in an amount such that the phosphate fiber/auxiliary fiber weight ratio will be about 2/1 or higher, that is, at least 2/1. Representative of suitable auxiliary fibers are glass fibers, mineral wool fibers, aramid fibers, steel fibers, and the like, and mixtures thereof.

The thermosetting resin-based binder materials suitable to prepare the asbestos-free friction material composites of the instant invention are those which provide the desired physical properties and characteristics in the final product, and, in general, may be any thermosetting resin generally known to be useful in the production of brake pads, brake lining segments, clutch facings, and the like. Representative thermosetting resins include phenol-formaldehyde resins, phenol-furfural resins, melamine-formaldehyde resins, epoxy resins, cross-linked alkyd resins, diallyl phthalate resins, and urea-formaldehyde resins. Preferred resins are phenol-formaldehyde resins. A phenol-formaldehyde resin suitable for use in the instant invention is available commercially from Schenectady Chemicals co., Inc. as SP6416.

As will be apparent to those skilled in the friction-material art, the thermosetting resins suitable for use in the instant invention may be used alone or in combination with a heat and chemical resistant vulcanized rubber. Examples of such rubber include nitrile rubber, butyl rubber, styrene-butadiene copolymer rubber, acrylonitrile rubber, and chlorinated butyl rubber. A preferred rubber is nitrile rubber.

When a rubber is used in the instant invention, it preferably constitutes less than 50 % of the thermosetting resin-based binder. It may be incorporated into the asbestos-free friction material composite in the form of a solution in an organic solvent such as trichlorethylene or, more preferably, in the form of a powder, and a vulcanizing agent - sulfur, 2-mercaptobenzothiazole, tetramethylthiuram disulfide, and mixtures thereof, for example - also can be used.

The particulate friction modifier component employed in the instant invention is incorporated to stabilize the coefficient of friction of the composite materials under a variety of operating and climactic conditions to which a typical brake element will be exposed during use so as to provide wear resistance for such composites. The particulate friction modifier preferably is a cashew-based material such as cashew nut shell oil-based friction particles. Suitable cashew-based friction particles are an aldehyde condensation product of cashew nut shell liquid and are available commercially from Colloid Chemicals Laboratories, Inc. as Collan 10A-40.

Particulate inorganic filler materials employed in the instant invention may be crystalline or amorphous in structure as long as they are able to maintain stability at temperatures up to 538°C (1000°F), and higher. Representative of suitable particulate inorganic filler materials include barytes (barium sulfate), carbon or graphite, calcium carbonate, silica, and the like. In general, however, dolomite, a conventional filler, is not preferred for use in the instant invention due to low normal friction exhibited by such composites. It will be recognized, of course, that this characteristic may vary, depending to some extent upon the remaining components of such composites.

The particle size of the particulate materials (that is, the particulate friction modifier and the particulate inorganic filler) is not particularly critical. The particle sizes normally employed in friction materials are satisfactory but wide deviations therefrom will have no substantial effect on performance. Particle sizes from about 0.5 $\mu$m to about 500 $\mu$m may be used.

In the practice of the instant invention, the components of the asbestos-free friction material composites are blended in the desired proportions in a mixer such as a Waring blender. The mixed components are then placed in a preform mold cavity having approximately the desired product shape. The mixture is then compressed at ambient temperatures and at a pressure of about 18.0 MPa (2600 psi) for a period of about one minute. The preform is then cured by heating to a temperature of about 171°C (340°F) for about one hour while maintaining the pressure at about 18.0 MPa. Alternatively, the preform step may be omitted and the mixture immediately subjected to the 171°C curing step. For larger test pieces, which may be trimmed to any desired size by conventional means known to the art, the formed pieces are subjected to a post cure in a drying oven at about 177°C (350°F) for about four hours.

Any convenient concentration (on a weight basis) of the components of the asbestos-free friction material composites may be used. In general, the composites of the instant invention will comprise (on a weight basis) from about 5 % to about 20 % of the phosphate fibers, from about 10 % to about 30 % of the thermosetting resin-based binder, from about 5 % to about 25 % of the particulate friction modifier, and from about 40 % to about 70 % of the particulate inorganic filler. In a preferred embodiment, the concentration for the phosphate fiber will range from about 10 % to about 17.5 %, for the thermosetting resin-based binder, from about 15 % to about 25 %, for the particulate friction modifier, from about 10 % to about 15 %, for the particulate inorganic filler, from about 45 % to about 65 %. In a most preferred embodiment, the concentration for the phosphate fiber will be, as previously noted, about 10 % to about 17.5 %, for the thermosetting resin-based binder, about 15 %, for the particulate friction modifier, about 10 %, with the balance being particulate inorganic filler. If desired, an auxiliary fiber may be substituted for a portion of the particulate inorganic filler and employed in combination with the phosphate fibers in an amount such that the auxiliary fibers will constitute about 2 % to about 10 % of the friction material composite (so long as the aforementioned phosphate fiber/auxiliary fiber weight ratio is at least 2/1). In a similar manner, a rubber (with nitrile rubber being preferred) may be substituted for a portion of the particulate inorganic filler and employed in combination with the thermosetting resin of the thermosetting resin-based binder in an amount such that the rubber will constitute about 0.5 % to about 5 % of the friction material composite.

The asbestos-free friction material composites of, and prepared in accordance with, the instant invention exhibit excellent wear, durability, friction, and strength characteristics, and at the same time present no health hazard.

The following specific examples illustrating the best presently-known methods of practicing this invention are described in detail in order to facilitate a clear understanding of the invention. It should be understood, however, that the detailed exposition of the application of the invention, while indicating preferred embodiments, are given by way of illustration only and are not to be construed as limiting the invention since various changes and modifications within the spirit of the invention will become apparent to those skilled in the art from this detailed description.

**Examples 1 - 14**

(a) <u>Calcium Sodium Phosphate Fibers</u> - Asbestiform crystalline calcium sodium phosphate fibers were prepared in five batches of 29.0 kg to 70.3 kg (64 lb to 155 lb) each by scale-up of the general procedures described in the previously referenced U.S. Patent 4 346 028. In a typical preparation, 20.452 parts 85.2 % phosphoric acid, 4.880 parts calcium carbonate, 3.241 parts sodium carbonate, and about 8.1 parts distilled water, providing an anhydrous basis mole percent ratio of 50.60 % $P_2O_5$, 32.45 % CaO, and 16.95 % $Na_2O$, were placed in a large alumina crucible and heated slowly in a furnace at a rate of 5°C/hr up to 1000°C, at which point essentially all the water and $CO_2$ had been driven off and the contents were molten. The melt was held at 1000°C for 24 hr, cooled to 740°C, at which time several small seed crystals of $[CaNa(PO_3)_3]_n$ were added to the surface of the melt which was held at 740°C for 72 hr to crystallize. The temperature was reduced to 720°C and held for an additional 72 hr to complete the crystallization, after which the crystallized mass was slowly cooled to room temperature and removed from the crucible. The crystallized mass was broken apart, passed through a mechanical jaw crusher, and then fiberized by dry milling in an air classification mill. The fibers had an average aspect ratio of 64.5, an average diameter of 2.09 μm, and a surface area of 6773 $cm^2/g$.

(b) <u>Friction Material Composite Preparation</u> - Sample asbestos-free friction material composites were prepared in two sizes - 1.27 cm wide x 15.24 cm long x 0.64 cm thick (0.5 in x 6 in x 0.25 in), with a weight of about 20.0 g and 5.08 cm x 15.24 cm long x 0.64 cm thick (2 in x 6 in x 0.25 in), with a weight of about 100.0 g.

Dry ingredients in the amount of either 20.0 g or 100.0 g, depending upon the composite size desired, and having the desired composition were dry blended thoroughly in a Waring blender. The blended material was loaded into a rectangular steel mold having a shape approximately that of the desired product and pressed for one hour at 18.3 MPa (2650 psi) and a temperature of 171°C (340°F). The 5.08 cm wide pressed pieces were subjected to a post cure in a drying oven at 177°C (350°F) for a period of four hours. For green flexural strength tests, the samples were compressed at 18.3 MPa (2650 psi) at ambient temperature for one minute. The parameters and property data for the asbestos-free friction material composites are tabulated in Table 1.

**Table 1**

| Example | Composition[1] wt.-% | Flexural Strength[2], MPa Green[3] | Cured[4] | Swell/Growth[5], % | Friction Coefficient, μ/- Friction Class[6] Normal | Hot |
|---------|---------------------|------------------------------------|----------|--------------------|----------------------------------------------------|-----|
| 2 | 45.0 Barytes 10.0 PF[9] | -- | 69912.84 | 0.58/0 | 0.372/F | 0.391/F |
| 3 | " | 86.18 | 64638.35 | 0.38/0 | 0.330/E | 0.382/F |
| 4[10] | 55.0 Asbestos | -- | 69175.10 | 0.75/0 | 0.290/E | 0.321/E |
| 5[10] | 55.0 Fiberglass | -- | 51662.42 | 0.18/0 | 0.530/G | 0.380/F |
| 6[10] | 55.0 Dolomite | 33.09 | 37107.58 | 0/0 | 0.448/F | 0.313/E |
| 7[10] | 45.0 Dolomite 10.0 PF[9] | 29.65 | 48042.67 | 0.80/0.80 | 0.220/D | 0.293/E |
| 8[10] | 50.0 Dolomite 5.0 Kevlar Aramid Fiber Pulp | 406.79 | 45850.14 | 0.20/0 | 0.330/E | 0.320/E |

| 9 | 45.0 Barytes | 87.56 | 69933.52 | 0.57/0 | 0.332/E | 0.428/F |
| 10 | 53.5 Barytes 1.5 NR[10] | 248.21 | 37790.16 | 0.20/0 | 0.668/H | 0.546/G |
| 11 | 43.5 Barytes 1.5 NR[10] 10.0 PF[9] | 386.11 | 64245.35 | 0.55/0.18 | 0.368/F | 0.396/F |
| 12 | 36.0 Barytes 1.5 NR[10] 17.5 PF[9] | 434.37 | 70436.84 | 1.24/0.53 | 0.312/E | 0.367/F |
| 13[10] | Commercial Asbestos Pad | -- | -- | 0.91/0.26 | 0.438/F | 0.467/G |
| 14[10] | Commercial Semi-metallic Pad | -- | -- | 1.23/0.96 | 0.338/E | 0.334/E |

**Table 1** (cont'd)

| | | Wear, % | | Minimum | |
| Exemple | Wt. | Thickness | | Requirements[7] | Quality Control[8] |
|---|---|---|---|---|---|
| 2 | 5.99 | 3.49 | | Pass | Good standard test; high fade in extended test. |
| 3 | 6.75 | 4.04 | | Pass | Good standard test; excessive fade in extended test. |
| 4[10] | 9.11 | 7.65 | | Pass | Acceptable performance |
| 5[10] | 11.81 | 10.66 | | Pass | Excessive fade; high pitched screech. |
| 6[10] | 3.04 | 1.93 | | Pass | Excessive variation in friction coefficient. |
| 7[10] | 4.55 | 10.53 | | Fail | Low normal friction. |
| 8[10] | 2.11 | 2.27 | | Fail | Excessive variation in friction coefficient. |
| 9 | 6.69 | 2.98 | | Pass | Good standard test; excessive fade in extended test. |
| 10 | 5.31 | 3.76 | | Pass | Excessive fade. |
| 11 | 6.03 | 3.35 | | Pass | Good standard test; excessive fade in extended test. |
| 12 | 4.74 | 2.82 | | Pass | Good standard test; excessive fade in extended test. |
| 13[10] | 11.77 | 8.45 | | Pass | Acceptable performance. |
| 14[10] | -- | 0.91 | | Pass | Excellent performance; low wear. |

[1] A base formulation was employed which had a weight % composition as follows:

33.33[15 %] phenol-formaldehyde thermosetting resin (containing hexamethylenetetramine as curing agent), available commercially from Schenectady Chemicals, Inc.

22.22[10 %] particulate friction modifier, which was an aldehyde condensation product of cashew nut shell liquid available commercially from Colloid Chemicals Laboratories, Inc. as Collan 10A-40.

44.44[20 %] barytes (barium sulfate) available commercially from Pfizer Minerals, Pigments & Metals Div.

[55 % fiber/filler/additive material.]

In use, the fiber (and other additives, if employed) to be tested was added to the base formulation in an amount sufficient to constitute 55 % by weight of the final composition. This resulted in the 33.33 %, 22.22 %, and 44.44 % in the base formulation being reduced to 15 %, 10 %, and 20 %, respectively, all by weight, in the final composition. If less than 55 % fiber was used, the balance was made up with filler material, for example, barytes, and/or rubber, for example, nitrile rubber.

[2, 3, 4] The test was carried out according to ASTM D790-80 test method for plastics on a flexural jig on an Instrom Universal testing instrument. The 15.24 cm long green (uncured) strength samples were cut in half to provide two 7.62 cm (3 in) test pieces and each piece was tested with a 50.8 mm (2 in) span. The cured samples were broken with a 101.60 mm (4 in) span and the two resulting pieces were rebroken with a 50.8 mm (2 in) span.

[5] The test was carried out according to SAE Test J160.

[6] The test was carried out according to SAE Test J661a by Greening Testing Laboratories, Inc., and the classifications were made in accordance with SAE Test J866a. The standard J661a test has 343° C (650° F) as the upper temperature limit. The extended test has an upper temperature limit of 454° C (850° F), a more severe test.

[7] This test was carried out according to SAE Test J998.

[8] Qualitative observations and comments regarding performance of test pieces during the SAE Test

6

EP 0 194 989 B1

J661a.
9 Phosphate fibers.
10 Comparative example.
11 Nitrile rubber.

**Claims**

1. An asbestos-free friction material composite containing phosphate fibers comprising:
   (a) asbestiform crystalline calcium M phosphate fibers wherein M is a metal cation selected from the group consisting of sodium and lithium, and mixtures thereof;
   (b) a thermosetting resin-based binder;
   (c) a particulate friction modifier; and
   (d) a particulate inorganic filler.

2. The asbestos-free friction material composite of Claim 1 wherein M is sodium.

3. The asbestos-free friction material composite of Claim 1 wherein the phosphate fibers have an aspect ratio of at least 30 : 1.

4. The asbestos-free friction material composite of Claim 3 wherein the phosphate fibers have an aspect ratio of from about 40 : 1 to about 100 : 1.

5. The asbestos-free friction material composite of Claim 1 wherein the phosphate fibers have an average diameter of from about 0.5 μm to about 20 μm.

6. The asbestos-free friction material composite of Claim 5 wherein the phosphate fibers have an average diameter of from about 1 μm to about 10 μm.

7. The asbestos-free friction material composite of Claim 1 wherein the composite further comprises an auxiliary fiber selected from the group consisting of glass fibers, mineral wool fibers, aramid fibers, steel fibers, and mixtures thereof.

8. The asbestos-free friction material composite of Claim 1 wherein the thermosetting resin-based binder comprises a phenol-formaldehyde thermosetting resin.

9. The asbestos-free friction material composite of Claim 8 wherein the thermosetting resin-based binder further comprises a rubber.

10. The asbestos-free friction material composite of Claim 9 wherein the rubber is a nitrile rubber.

11. The asbestos-free friction material composite of Claim 1 wherein the particulate friction modifier is an aldehyde condensation product of cashew nut shell liquid.

12. The asbestos-free friction material composite of Claim 1 wherein the particulate inorganic filler is selected from the group consisting of barytes, calcium carbonate, silica, and mixtures thereof.

13. The asbestos-free friction material composite of Claim 11 wherein the particulate inorganic filler is barytes.

14. The asbestos-free friction material composite of Claim 1 wherein the particulate friction modifier and the particulate inorganic filler have an average particle size from about 0.5 μm to about 500 μm.

15. The asbestos-free friction material composite of claim 1 wherein the composite comprises
   (a) from about 5 % to about 20 % by weight of the phosphate fibers;
   (b) from about 10 % to about 30 % by weight of the thermosetting resin-based binder;
   (c) from about 5 % to about 25 % by weight of the particulate friction modifier; and
   (d) from about 40 % to about 70 % by weight of the particulate inorganic filler.

16. An asbestos-free friction material composite containing phosphate fibers comprising:
   (a) from about 10 % to about 17.5 % by weight of asbestiform crystalline calcium sodium phosphate having an aspect ratio of from about 40 : 1 to about 100 : 1 and an average diameter of from about 1 μm to about 10 μm;
   (b) from about 15 % to about 25 % by weight of a phenol-formaldehyde thermosetting resin-based binder;
   (c) from about 10 % to about 15 % by weight of a particulate aldehyde-cashew nut shell liquid condensation product; and
   (d) from about 45 % to about 65 % by weight of particulate barytes.

17. A process for the preparation of an asbestos-free friction material composite containing phosphate fibers which comprises:
   (a) blending asbestiform crystalline calcium M phosphate fibers wherein M is a metal cation selected from the group consisting of sodium and lithium, and mixtures thereof, a thermosetting resin-based binder, a particulate friction modifier, and a particulate inorganic filler to form a uniform mixture;
   (b) placing the mixture within a mold cavity having a shape approximately that of the desired composite; and
   (c) compressing the mixture at a temperature and a pressure, and for a time, sufficient to form the asbestos-free friction material composites.

18. The process of Claim 17 wherein M is sodium.

19. The process of Claim 17 wherein the phosphate fibers have an aspect ratio of at least 30 : 1.

20. The process of Claim 19 wherein the phosphate fibers have an aspect ratio of from about 40 : 1 to about 100 : 1.

21. The process of Claim 17 wherein the phosphate fibers have an average diameter of from about 0.5 µm to about 20 µm.

22. The process of Claim 21 wherein the phosphate fibers have an average diameter of from about 1 µm to about 10 µm.

23. The process of Claim 17 wherein the composite further comprises an auxiliary fiber selected from the group consisting of glass fibers, mineral wool fibers, aramid fibers, steel fibers, and mixtures thereof.

24. The process of Claim 17 wherein the thermosetting resin-based binder comprises a phenol-formaldehyde thermosetting resin.

25. The process of Claim 24 wherein the thermosetting resin-based binder further comprises a rubber.

26. The process of Claim 25 wherein the rubber is a nitrile rubber.

27. The process of Claim 17 wherein the particulate friction modifier is an aldehyde condensation product of cashew nut shell liquid.

28. The process of Claim 17 wherein the particulate inorganic filler is selected from the group consisting of barytes, calcium carbonate, silica, and mixtures thereof.

29. The process of Claim 28 wherein the particulate inorganic filler is barytes.

30. The process of Claim 17 wherein the particulate friction modifier and the particulate inorganic filler have an average particle size from about 0.5 µm to about 500 µm.

31. The process of Claim 17 wherein the composite comprises:
(a) from about 5 % to about 20 % by weight of the phosphate fibers;
(b) from about 10 % to about 30 % by weight of the thermosetting resin-based binder;
(c) from about 5 % to about 25 % by weight of the particulate friction modifier; and
(d) from about 40 % to about 70 % by weight of the particulate inorganic filler.

32. The process of Claim 17 wherein the mixture is compressed at ambient temperature and a pressure of about 18.0 MPa for about one minute.

33. The process of Claim 32 wherein the mixture is further compressed for a period of about one hour at a temperature of about 171°C and a pressure of about 18.0 MPa.

34. The process of Claim 17 wherein the mixture is compressed at a temperature of about 171°C and a pressure of about 18.0 MPa for about one hour.

35. The process of Claim 17 wherein the composite is subjected to a post cure at a temperature of about 177°C for about four hours.

36. A process for the preparation of an asbestos-free friction material composite containing phosphate fibers which comprises:
(a) blending from about 10 % to about 17.5 % by weight of asbestiform crystalline calcium sodium phosphate having an aspect ratio of from about 40 : 1 to about 100 : 1 and an average diameter of from about 1 µm to about 10 µm, from about 15 % to about 25 % by weight of a phenol-formaldehyde thermosetting resin-based binder, from about 10 % to about 15 % by weight of a particulate aldehyde-cashew nut shell liquid condensation product, and from about 45 % to about 65 % by weight of particulate barytes to form a uniform mixture;
(b) placing the mixture within a mold cavity having a shape approximately that of the desired composite;
(c) compressing the mixture at a temperature and a pressure, and for a time, sufficient to form the asbestos-free friction material composite.

37. The process of Claim 36 wherein the mixture is compressed at ambient temperature and a pressure of about 18.0 MPa for about one minute.

38. The process of Claim 37 wherein the mixture is further compressed for a period of about one hour at a temperature of about 171°C and a pressure of about 18.0 MPa.

39. The process of Claim 35 wherein the mixture is compressed at a temperature of about 171°C and a pressure of about 18.0 MPa for about one hour.

40. The process of Claim 35 wherein the composite is subjected to a post cure at a temperature of about 177°C for about four hours.

## Patentansprüche

1. Phosphatfasern enthaltender, asbestfreier Reibungsmaterialverbundstoff umfassend:
a) asbestförmige kristalline Calcium M-Phosphatfasern, worin M ein Metallkation ausgewählt aus der Gruppe bestehend aus Natrium, Lithium und Mischungen hievon ist,
b) ein wärmehärtendes Bindemittel auf Harzbasis,
c) einen teilchenförmigen Reibungsmodifikator und
d) einen teilchenförmigen anorganischen Füllstoff.

2. Asbestfreier Reibungsmaterialverbundstoff nach Anspruch 1, worin M Natrium ist.

3. Asbestfreier Reibungsmaterialverbundstoff nach Anspruch 1, worin die Phosphatfasern ein Beziehungsverhältnis von mindestens 30 : 1 aufweisen.

4. Asbestfreier Reibungsmaterialverbundstoff nach Anspruch 3, worin die Phosphatfasern ein Beziehungsverhältnis von etwa 40 : 1 bis etwa 100 : 1 aufweisen.

5. Asbestfreier Reibungsmaterialverbundstoff nach Anspruch 1, worin die Phosphatfasern einen mittleren Durchmesser von etwa 0,5 bis etwa 20 μm aufweisen.

6. Asbestfreier Reibungsmaterialverbundstoff nach Anspruch 5, worin die Phosphatfasern einen mittleren Durchmesser von etwa 1 bis etwa 10 μm aufweisen.

7. Asbestfreier Reibungsmaterialverbundstoff nach Anspruch 1, wobei der Verbundstoff weiters Hilfsfasern ausgewählt aus der Gruppe bestehend aus Glasfasern, Mineralwollefasern, Aramidfasern, Stahlfasern und Mischungen hievon umfaßt.

8. Asbestfreier Reibungsmaterialverbundstoff nach Anspruch 1, worin das wärmehärtende Bindemittel auf Harzbasis ein wärmehärtendes Phenol-Formaldehydharz umfaßt.

9. Asbestfreier Reibungsmaterialverbundstoff nach Anspruch 8, worin das wärmehärtende Bindemittel auf Harzbasis weiters einen Kautschuk umfaßt.

10. Asbestfreier Reibungsmaterialverbundstoff nach Anspruch 9, worin der Kautschuk ein Nitrilkautschuk ist.

11. Asbestfreier Reibungsmaterialverbundstoff nach Anspruch 1, worin der teilchenförmige Reibungsmodifikator ein Aldehydkondensationsprodukt von Acajounußschalenflüssigkeit ist.

12. Asbestfreier Reibungsmaterialverbundstoff nach Anspruch 1, worin der teilchenförmige anorganische Füllstoff ausgewählt ist aus der Gruppe bestehend aus Baryten, Calciumcarbonat, Siliziumdioxid und Mischungen hievon.

13. Asbestfreier Reibungsmaterialverbundstoff nach Anspruch 11, worin der teilchenförmige anorganische Füllstoff Baryte sind.

14. Asbestfreier Reibungsmaterialverbundstoff nach Anspruch 1, worin der teilchenförmige Reibungsmodifikator und der teilchenförmige anorganische Füllstoff eine mittlere Teilchengröße von etwa 0,5 bis etwa 500 μm aufweisen.

15. Asbestfreier Reibungsmaterialverbundstoff nach Anspruch 1, worin der Verbundstoff
   a) etwa 5 bis etwa 20 Gew.-% Phosphatfasern,
   b) etwa 10 bis etwa 30 Gew.-% wärmehärtendes Bindemittel auf Harzbasis,
   c) etwa 5 bis etwa 25 Gew.-% teilchenförmigen Reibungsmodifikator und
   d) etwa 40 bis etwa 70 Gew.-% teilchenförmigen anorganischen Füllstoff umfaßt.

16. Phosphatfasern enthaltender, asbestfreier Reibungsmaterialverbundstoff umfassend
   a) etwa 10 bis etwa 17,5 Gew.-% asbestförmiges kristallines Calciumnatriumphosphat mit einem Beziehungsverhältnis von etwa 40 : 1 bis etwa 100 : 1 und mit einem mittleren Durchmesser von etwa 1 bis etwa 10 μm,
   b) etwa 15 bis etwa 25 Gew.-% eines wärmehärtenden Phenol-Formaldehydharzbindemittels,
   c) etwa 10 bis etwa 15 Gew.-% eines teilchenförmigen Aldehyd-Acajounußschalenflüssigkeits-Kondensationsproduktes und
   d) etwa 45 bis etwa 65 Gew.-% teilchenförmige Baryte.

17. Verfahren zum Herstellen eines Phosphatfasern enthaltenden, asbestfreien Reibungsmaterialverbundstoffes, welches
   a) das Mischen von asbestförmigen kristallinen Calcium M-Phosphatfasern, worin M ein Metallkation ausgewählt aus der Gruppe bestehend aus Natrium, Lithium und Mischungen hievon ist, eines wärmehärtenden Bindemittels auf Harzbasis, eines teilchenförmigen Reibungsmodifikators und eines teilchenförmigen anorganischen Füllstoffes unter Bildung einer gleichförmigen Mischung,
   b) das Einbringen der Mischung in einen Formhohlraum mit einer Gestalt, die ungefähr jener des gewünschten Verbundstoffes entspricht, und
   c) das Komprimieren der Mischung bei einer Temperatur und bei einem Druck und während eines Zeitraumes, die ausreichend sind, die asbestfreien Reibungsmaterialverbundstoffe zu bilden, umfaßt.

18. Verfahren nach Anspruch 17, worin M Natrium ist.

19. Verfahren nach Anspruch 17, worin die Phosphatfasern ein Beziehungsverhältnis von mindestens 30 : 1 aufweisen.

20. Verfahren nach Anspruch 19, worin die Phosphatfasern ein Beziehungsverhältnis von etwa 40 : 1 bis etwa 100 : 1 aufweisen.

21. Verfahren nach Anspruch 17, worin die Phosphatfasern einen mittleren Durchmesser von etwa 0,5 bis etwa 20 μm aufweisen.

22. Verfahren nach Anspruch 21, worin die Phosphatfasern einen mittleren Durchmesser von etwa 1 bis etwa 10 μm aufweisen.

23. Verfahren nach Anspruch 17, worin der Verbundstoff weiters Hilfsfasern ausgewählt aus der Gruppe bestehend aus Glasfasern, Mineralwollefasern, Aramidfasern, Stahlfasern und Mischungen hievon umfaßt.

24. Verfahren nach Anspruch 17, worin das wärmehärtende Bindemittel auf Harzbasis ein wärmehärtendes Phenol-Formaldehydharz umfaßt.

25. Verfahren nach Anspruch 24, worin das wärmehärtende Bindemittel auf Harzbasis weiters einen Kautschuk umfaßt.

26. Verfahren nach Anspruch 25, worin der Kautschuk ein Nitrilkautschuk ist.

27. Verfahren nach Anspruch 17, worin der teilchenförmige Reibungsmodifikator ein Aldehydkondensationsprodukt von Acajounußschalenflüssigkeit ist.

28. Verfahren nach Anspruch 17, worin der teilchenförmige anorganische Füllstoff ausgewählt ist aus der Gruppe bestehend aus Baryten, Calciumcarbonat, Siliziumdioxid und Mischungen hievon.

29. Verfahren nach Anspruch 28, worin der teilchenförmige anorganische Füllstoff Baryte sind.

9

30. Verfahren nach Anspruch 17, worin der teilchenförmige Reibungsmodifikator und der teilchenförmige anorganische Füllstoff eine mittlere Teilchengröße von etwa 0,5 bis etwa 500 μm aufweisen.

31. Verfahren nach Anspruch 17, worin der Verbundstoff

a) etwa 5 bis etwa 20 Gew.-% Phosphatfasern,

b) etwa 10 bis etwa 30 Gew.-% wärmehärtendes Bindemittel auf Harzbasis,

c) etwa 5 bis etwa 25 Gew.-% teilchenförmigen Reibungsmodifikator und

d) etwa 40 bis etwa 70 Gew.-% teilchenförmigen anorganischen Füllstoff umfaßt.

32. Verfahren nach Anspruch 17, worin die Mischung etwa 1 Minute bei Umgebungstemperatur und bei einem Druck von etwa 18,0 MPa komprimiert wird.

33. Verfahren nach Anspruch 32, worin die Mischung während eines Zeitraumes von etwa 1 Stunde bei einer Temperatur von etwa 171°C und bei einem Druck von etwa 18,0 MPa weiter komprimiert wird.

34. Verfahren nach Anspruch 17, worin die Mischung etwa 1 Stunde bei einer Temperatur von etwa 171°C und bei einem Druck von etwa 18,0 MPa komprimiert wird.

35. Verfahren nach Anspruch 17, worin der Verbundstoff etwa 4 Stunden einer Nachhärtung bei einer Temperatur von etwa 177°C unterworfen wird.

36. Verfahren zur Herstellung eines Phosphatfasern enthaltenden, asbestfreien Reibungsmaterialverbundstoffes, welches

a) das Mischen von etwa 10 bis etwa 17,5 Gew.-% asbestförmigem kristallinen Calciumnatriumphosphat mit einem Beziehungsverhältnis von etwa 40 : 1 bis etwa 100 : 1 und mit einem mittleren Durchmesser von etwa 1 bis etwa 10 μm, etwa 15 bis etwa 25 Gew.-% eines wärmehärtenden Phenol-Formaldehydharzbindemittels, etwa 10 bis etwa 15 Gew.-% eines teilchenförmigen Aldehyd-Acajounußschalenflüssigkeits-Kondensationsproduktes und etwa 45 bis etwa 65 Gew.-% teilchenformiger Baryte unter Bildung einer gleichförmigen Mischung,

b) das Einbringen der Mischung in einen Formhohlraum mit einer Gestalt, die ungefähr jener des gewünschten Verbundstoffes entspricht, und

c) das Komprimieren der Mischung bei einer Temperatur und bei einem Druck und während eines Zeitraumes, die ausreichend sind, den asbestfreien Reibungsmaterialverbundstoff zu bilden, umfaßt.

37. Verfahren nach Anspruch 36, worin die Mischung etwa 1 Minute bei Umgebungstemperatur und bei einem Druck von etwa 18,0 MPa komprimiert wird.

38. Verfahren nach Anspruch 37, worin die Mischung während eines Zeitraumes von etwa 1 Stunde bei einer Temperatur von etwa 171°C und bei einem Druck von etwa 18,0 MPa weiter komprimiert wird.

39. Verfahren nach Anspruch 35, worin die Mischung etwa 1 Stunde bei einer Temperatur von etwa 171°C und einem Druck von etwa 18,0 MPa komprimiert wird.

40. Verfahren nach Anspruch 35, worin der Verbundstoff etwa 4 Stunden einer Nachhärtung bei einer Temperatur von etwa 177°C unterworfen wird.

## Revendications

1. Matériau de friction composite dépourvu d'amiante contenant des fibres de phosphate comprenant:

(a) des fibres de phosphate de calcium et de M cristallines asbestiformes sachant que M représente un cation métallique choisi dans le groupe constitué par le sodium et le lithium et leurs mélanges;

(b) un agent de liaison à base de résine thermodurcissable;

(c) un agent de modification de la friction particulaire; et

(d) une charge inorganique particulaire.

2. Matériau de friction composite dépourvu d'amiante selon la revendication 1, dans lequel M représente le sodium.

3. Matériau de friction composite dépourvu d'amiante selon la revendication 1, dans lequel les fibres de phosphate présentent un rapport de forme d'au moins 30 : 1.

4. Matériau de friction composite dépourvu d'amiante selon la revendication 3, dans lequel les fibres de phosphate présentent un rapport de forme d'environ 40 : 1 à environ 100 : 1.

5. Matériau de friction composite dépourvu d'amiante selon la revendication 1, dans lequel les fibres de phosphate présentent un diamètre moyen d'environ 0,5 μm à environ 20 μm.

6. Matériau de friction composite dépourvu d'amiante selon la revendication 5, dans lequel les fibres de phosphate présentent un diamètre moyen d'environ 1 μm à environ 10 μm.

7. Matériau de friction composite dépourvu d'amiante selon la revendication 1, dans lequel le composite comprend encore une fibre auxiliaire choisie dans le groupe constitué par des fibres de verre, des fibres de laine minérale, des fibres d'aramide, des fibres d'acier, et leurs mélanges.

8. Matériau de friction composite dépourvu d'amiante selon la revendication 1, dans lequel l'agent de liaison à base de résine thermodurcissable comprend une résine phénol-formaldéhyde thermodurcissable.

9. Matériau de friction composite dépourvu d'amiante selon la revendication 8, dans lequel l'agent de liaison à base de résine thermodurcissable comprend encore un caoutchouc.

10. Matériau de friction composite dépourvu d'amiante selon la revendication 9, dans lequel le caoutchouc est un caoutchouc nitrile.

10

11. Matériau de friction composite dépourvu d'amiante selon la revendication 1, dans lequel l'agent de modification de la friction particulaire est un produit de condensation avec l'aldéhyde de liquide de coquille de noix d'acajou.

12. Matériau de friction composite dépourvu d'amiante selon la revendication 1, dans lequel la charge inorganique particulaire est choisie dans le groupe constitué par de la barytine, du carbonate de calcium, de la silice et leurs mélanges.

13. Matériau de friction composite dépourvu d'amiante selon la revendication 11, dans lequel la charge inorganique particulaire est une charge de barytine.

14. Matériau de friction composite dépourvu d'amiante selon la revendication 1, dans lequel l'agent de modification de la friction particulaire et la charge inorganique particulaire présentent une dimension particulaire moyenne d'environ 0,5 µm à environ 500 µm.

15. Matériau de friction composite dépourvu d'amiante selon la revendication 1, dans lequel le composite comprend:
(a) d'environ 5 % à environ 20 % en poids de fibres de phosphate;
(b) d'environ 10 % à environ 30 % en poids d'agent de liaison à base de résine thermodurcissable;
(c) d'environ 5 % à environ 25 % en poids d'agent de modification de la friction particulaire et
(d) d'environ 40 % à environ 70 % en poids de charge inorganique particulaire.

16. Matériau de friction composite dépourvu d'amiante contenant des fibres de phosphate comprenant:
(a) d'environ 10 % à environ 17,5 % en poids de phosphate de calcium et de sodium cristallin asbestiforme présentant un rapport de forme d'environ 40 : 1 à environ 100 : 1, et un diamètre moyen d'environ 1 µm à environ 10 µm;
(b) d'environ 15 % à environ 25 % en poids d'un agent de liaison à base de résine phénolformaldéhyde thermodurcissable;
(c) d'environ 10 % à environ 15 % en poids d'un produit de condensation particulaire aldéhyde liquide de coquille de noix d'acajou, et
(d) d'environ 45 % à environ 65 % en poids de barytine particulaire.

17. Procédé de préparation d'un matériau de friction composite dépourvu d'amiante contenant des fibres de phosphate qui comprend:
(a) le mélange de fibres de phosphate de calcium et de M cristallines asbestiformes sachant que M représente un cation métallique choisi dans le groupe constitué par le sodium et le lithium et leurs mélanges, d'un agent de liaison à base de résine thermodurcissable, d'un agent de modification de la friction particulaire et d'une charge inorganique particulaise pour former un mélange homogène;
(b) l'introduction du mélange dans la cavité d'un moule présentant approximativement la forme du composite voulu, et
(c) la compression du mélange à une température et une pression et pendant un temps suffisants pour former les matériaux de friction composite dépourvus d'amiante.

18. Procédé selon la revendication 17, dans lequel M représente le sodium.

19. Procédé selon la revendication 17, dans lequel les fibres de phosphate présentent un rapport de forme d'au moins 30 : 1.

20. Procédé selon la revendication 19, dans lequel les fibres de phosphate présentent un rapport de forme d'environ 40 : 1 à environ 100 : 1.

21. Procédé selon la revendication 17, dans lequel les fibres de phosphate présentent un diamètre moyen d'environ 0,5 µm à environ 20 µm.

22. Procédé selon la revendication 21, dans lequel les fibres de phosphate présentent un diamètre moyen d'environ 1 µm à environ 10 µm.

23. Procédé selon la revendication 17, dans lequel le composite comprend encore une fibre auxiliaire choisie dans le groupe constitué par des fibres de verre, des fibres de laine minérale, des fibres d'aramide, des fibres d'acier et leurs mélanges.

24. Procédé selon la revendication 17, dans lequel l'agent de liaison à base de résine thermodurcissable comprend une résine phénol-formaldéhyde thermodurcissable.

25. Procédé selon la revendication 24, dans lequel l'agent de liaison à base de résine thermodurcissable comprend encore un caoutchouc.

26. Procédé selon la revendication 25, dans lequel le caoutchouc est un caoutchouc nitrile.

27. Procédé selon la revendication 17, dans lequel l'agent de modification de la friction particulaire est un produit de condensation avec l'aldéhyde de liquide de coquille de noix d'acajou.

28. Procédé selon la revendication 17, dans lequel la charge inorganique particulaire est choisie dans le groupe constitué par de la barytine, du carbonate de calcium, de la silice et leurs mélanges.

29. Procédé selon la revendication 28, dans lequel la charge inorganique particulaire est une charge de barytine.

30. Procédé selon la revendication 17, dans lequel l'agent de modification de la friction particulaire et la charge inorganique particulaire présentent une dimension particulaire moyenne d'environ 0,5 µm à environ 500 µm.

31. Procédé selon la revendication 17, dans lequel le composite comprend:
(a) d'environ 5 % à environ 20 % en poids de fibres de phosphate;
(b) d'environ 10 % à environ 30 % enpoids d'agent de liaison à base de résine thermodurcissable;

(c) d'environ 5 % à environ 25 % enpoids d'agent de modification de la friction particulaire, et

(d) d'environ 40 % à énviron 70 % en poids de charge inorganique particulaire.

32. Procédé selon la revendication 17, dans lequel on comprime le mélange à température ambiante et à une pression d'environ 18,0 MPa pendant environ une minute.

33. Procédé selon la revendication 32, dans lequel on comprime encore le mélange pendant environ une heure à une température d'environ 171°C et une pression d'environ 18,0 MPa.

34. Procédé selon la revendication 17, dans lequel on comprime le mélange à une température d'environ 171°C et une pression d'environ 18,0 MPa pendant environ une heure.

35. Procédé selon la revendication 17, dans lequel on soumet le composite à un post-durcissement à une température d'environ 177°C pendant environ quatre heures.

36. Procédé de préparation d'un matériau de friction composite dépourvu d'amiante contenant des fibres de phosphate qui comprend:

(a) le mélange d'environ 10 % à environ 17,5 % en poids de phosphate de calcium et de sodium cristallin asbestiforme présentant un rapport de forme d'environ 40 :1 à environ 100 : 1 et un diamètre moyen d'environ 1 µm à environ 10 µm, d'environ 15 % à environ 25 % en poids d'un agent de liaison à base de résine phénol-formaldéhyde thermodurcissable, d'environ 10 % à environ 15 % en poids d'un produit de condensation particulaire aldéhydeliquide de coquille de noix d'acajou et d'environ 45 % à environ 65 % en poids de barytine particulaire pour former un mélange homogène;

(b) l'introduction du mélange dans la cavité d'un moule ayant approximativement la forme du composite voulu;

(c) la compression du mélange à une température et une pression et pendant un temps suffisants pour former le matériau de friction composite dépourvu d'amiante.

37. Procédé selon la revendication 36, dans lequel on comprime le mélange à température ambiante et à une pression d'environ 18,0 MPa pendant environ une minute.

38. Procédé selon la revendication 37, dans lequel on comprime encore le mélange pendant environ une heure à une température d'environ 171°C et une pression d'environ 18,0 MPa.

39. Procédé selon la revendication 35, dans lequel on comprime le mélange à une température d'environ 171°C et une pression d'environ 18,0 MPa pendant environ une heure.

40. Procédé selon la revendication 35, dans lequel on soumet le composite à un post-durcissement à une température d'environ 177°C pendant environ quatre heures.